# EUROPEAN PATENT SPECIFICATION

(11) **EP 2 896 502 B1**
(45) Date of publication and mention of the grant of the patent: **08.03.2017**
(21) Application number: 14151504.9
(22) Date of filing: 16.01.2014
(51) Int. Cl.: B32B 38/00, B32B 37/20, B05D 1/00

(54) **Composite sheet and method of manufacturing**
Verbundfolie und Verfahren zur Herstellung
Feuille composite et procédé de fabrication

(43) Date of publication of application: 22.07.2015
(73) Proprietor: ThyssenKrupp Steel Europe AG, 47166 Duisburg (DE); VITO NV, 2400 Mol (BE)
(72) Inventor: Klüppel, Ingo, 44791 Bochum (DE); Strack, Michael, 45665 Recklinghausen (DE); Rogner, Ingo, 85049 Ingolstadt (DE); Scherf, Nicolé, 44135 Dortmund (DE); Da Ponte, Gabriella, 2500 Lier (BE); Havermans, Danny, 2340 Beerse (BE); Paulussen, Sabine, 2100 Deurne (BE); Verheyde, Bert, 3500 Hasselt (BE)
(74) Representative: Cohausz & Florack

(56) References cited:
- EP-A2- 1 593 438
- WO-A2-01/61069
- DE-A1-102007 046 226

## Description

The invention relates to a method of manufacturing a composite sheet, in particular a sandwich sheet, wherein the composite sheet comprises at least two outer metal layers and at least one intermediate polymer layer wherein the polymer layer comprises a thermoplastic polymer. Furthermore, the invention relates to a composite sheet as well.

Composite sheets, in particular sandwich sheets comprising two outer metal layers and an intermediate polymer layer between both outer metal layers are used to ensure properties of normal bulk metal sheets but additionally providing a reduced weight. These composite sheets allow construction of for example a vehicle with less weight. Additionally, composite sheets in particular sandwich sheets provide damping properties for acoustic noise and high rigidity and stiffness. Not only the mechanical properties of the metal layers in use but also the at least one intermediate polymer layer has a great influence onto the rigidity and stiffness properties, too. Another important aspect of such a composite sheet is the adhesion strength between the metal layers and the polymer layer which has a direct influence on the stiffness and as well as on the rigidity of the composite sheet. The adhesion strength can be measured by the T-peel test according DIN 53282.

In order to increase the T-peel value between the outer metal layers and the polymer layer it is known to use adhesion promoter layers coated on the inner side of the metal layers of the composite sheet. However, it has been recognized that the adhesion strength can be improved further especially for producing complex shaped parts without delamination.

In the European patent application EP 2 589 438 A1 a plasma surface activation method is disclosed which uses a precursor solution injected as an aerosol into a plasma. The coating of the substrate is achieved by moving the substrate into the plasma including the aerosol. The deposition was carried out for nearly 30 s, which seems to be not applicable to the production of composite sheets using for example a continuous manufacturing process.

A further method of manufacturing a composite sheet having two outer layers is known from EP-A-1 593 438.

Starting from the aforementioned prior art it is an object of the present invention to provide a method for manufacturing composite sheets, in particular sandwich sheets which allows an economical way of production and with which sandwich sheets with higher peel test value can be produced.

The above mentioned object is solved according to a first aspect of the present invention by a method for manufacturing a composite sheet, in particular a sandwich sheet comprising the steps of:
- providing at least a first and a second metal substrate for providing the outer metal layers and at least one intermediate polymer layer;
   - coating at least one of said metal substrates with an adhesion promoter layer by plasma coating at the inner side of the at least one metal substrate, wherein the plasma is generated at atmospheric pressure and wherein the inner side of the at least one metal substrate has contact with the at least one intermediate polymer layer, wherein plasma coating includes: providing a process gas, generating a plasma, injecting a precursor for providing the adhesion promoter layer into the generated plasma or plasma afterglow, moving or placing the at least one metal substrate into the plasma or plasma afterglow and depositing at least in parts a plasma polymerized adhesion promoter layer on the surface of inner side of the at least one metal substrate; and
- laminating the at least one intermediate polymer layer and the two outer metal layers to build a composite material.

Investigations of the inventors have revealed that coating the inner side of a metal layer of a composite sheet with a plasma polymerized adhesion promoter layer ensures an increase in peel test value to levels which have not been achieved by using conventional adhesion promoter layers coated by for example wet chemical applications like roller coating, spray coating or dip coating.

The plasma coating step is preferably provided inline with the laminating step of the composite material, in particular the sandwich material from which composite sheets, in particular sandwich sheets can be made of. It has been surprisingly found that the manufacturing speed allows including a plasma-coating-step of the inner sides of the metal layers of a composite sheet with the manufacturing step of laminating both metal layers together with the intermediate thermoplastic polymer layer. Composite sheets manufactured according to the present invention show an increase in peel test value which is more than 1.5 times higher than the peel test value of conventional adhesion promoter layer if both inner sides of the metal layers are coated with the plasma polymerized adhesion promoter layer. The increase in peel test value is an important feature of a composite sheet, in particular a sandwich sheet for producing complex shaped parts for example vehicle parts. Alternatively the plasma coating can be carried out in a separate step. As substrate strip or sheet material can be used.

According to a first embodiment the precursor for providing the adhesion promoter layer is in liquid state. An aerosol is created comprising a support gas and at least one precursor liquid which is injected into the plasma or plasma afterglow. Alternatively a precursor in a gaseous state can be used and directly injected into the plasma or plasma afterglow without the need of a support gas. Furthermore, a preferred process gas or support gas contains N₂, CO₂, Ar and/or He. Good results with respect to an increase of the peel test value of the composite sheet were achieved if the aerosol is generated using a precursor liquid comprising organic acid, in particular organic carboxylic acid, in particular an acrylic acid or methacrylic acid. Other organic acids can also be used.

In particular the results related to the increase of peel test values have been achieved according to a next embodiment by using a liquid or gaseous precursor comprising allylamine, allylmethacrylate, (3-glycidoxypropyl)trimethoxysilane (3-aminopropyl)triethoxysilane or preferred hydroxyethylacrylate.

According to another embodiment of the invention the process gas further comprises at least hydrogen as reactive gas. The combination of for example nitrogen and hydrogen as reactive gas leads to a further increase of the peel test value of manufactured composite sheets.

Preferably the process gas comprises in maximum 5 vol.-% hydrogen, more preferably in maximum 4 vol.-%, more preferably in maximum 3 vol.-% in order to ensure an increase of peel test value. Yet, it is believed that a minimum amount of 0.1 vol.-% of hydrogen is a lower limit to provide the effect of an increase in peel test value.

According to a further embodiment of the present invention a plasma polymerized adhesion promoter layer with a thickness of 2 to 50 nm is deposited on the inner side of at least one metal layer. Despite of the low thickness of the adhesion promoter layer a significant increase in adhesion strength can be achieved.

According to another embodiment of the invention the plasma is generated at atmospheric pressure preferably between a first electrode and a second electrode whereby the plasma coating apparatus is equipped in a simple manner.

According to a next embodiment the metal substrates are uncoated steel substrates or steel substrates, which are plated with zinc, zinc-magnesium, chromium-plated or plated on an aluminum-basis. The coatings however additionally provide a protection against corrosion of the steel substrates for example. Other metal substrates are stainless steel, aluminum and its alloys and magnesium and its alloys, zinc, copper or titanium or their combinations or plated metal substrates of the afore mentioned metals.

According to a second aspect of the invention the above mentioned object of the present invention is solved by a composite sheet, in particular a sandwich sheet, consisting of at least two outer metal layers and at least one intermediate thermoplastic polymer layer, wherein at least one inner side of one outer metal layer comprises a plasma polymerized adhesion promoter layer coated by the inventive method

The inventive composite sheet with the increased peel test value enables higher deformation degrees and better T-bend results at small outside radii to produce complex shaped parts without delamination.

In particular the composite sheet is further improved in that both inner sides of both outer metal layers are coated with an adhesion promoter layer by plasma coating.

According to a next embodiment of the composite sheet the plasma polymerized adhesion promoter layer has preferably a thickness of 2 to 50 nm, which allows achieving a reliable increase in peel test value.

According to a next embodiment of the inventive composite sheet the outer metal layers are made of an uncoated steel or a steel substrate, which is plated with zinc, zinc-magnesium, chromium-plated or plated on an aluminum-basis in order to provide a high corrosion resistance. Further metals like stainless steel, aluminum and its alloys and magnesium and its alloys, zinc, copper, titanium or their combinations can be used.

In the following the invention will be described on the basis of embodiments of the manufacturing method in combination with the drawings. The drawings show in
- Fig. 1: a schematic embodiment of the manufacturing method according to the present invention,
- Fig. 2: a schematic sectional view of a composite sheet according to another embodiment of the present invention and
- Fig. 3: a schematic sectional view of a plasma coating process used in the present embodiment
- Fig. 4: a schematic sectional view of a plasma coating process used in a second embodiment of the present invention
- Fig. 5: a schematic sectional view of a plasma coating process used in a third embodiment of the present invention.

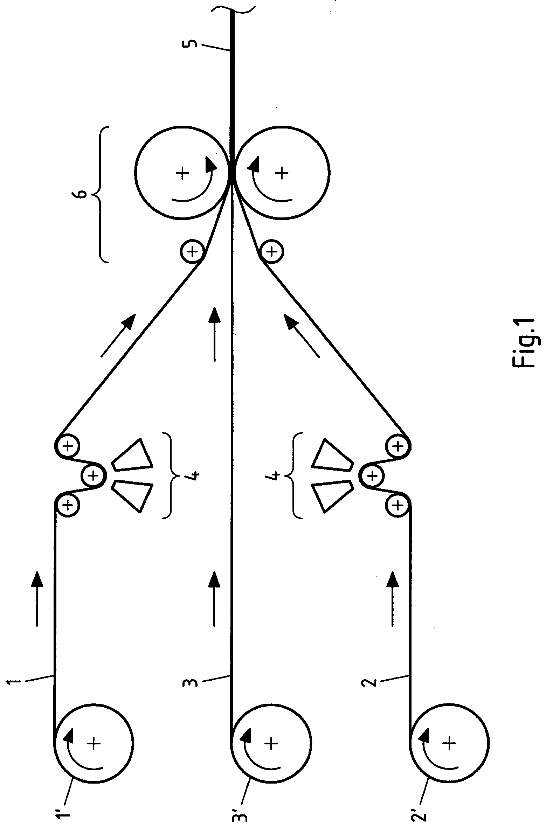

Fig. 1 shows a schematic view of an embodiment of the manufacturing method according to the present invention. The first and the second metal strip 1, 2 are provided by coils 1' and 2' mounted on an uncoiling device which is not shown in the drawings. Furthermore on another coil 3' an intermediate thermoplastic layer 3 is provided. Each metal strip 1, 2 is plasma coated by a plasma coating apparatus 4, which is described schematically beow. After coating the inner sides of the metal strips 1, 2 both metal strips 1, 2 are laminated to a composite strip 5 using a laminating apparatus 6 which is also shown schematically. It has been surprisingly found that plasma coating for coating the inner side of the metal layers 1, 2 with a plasma polymerized adhesion promoter layer is suitable for manufacturing a composite strip 5 in succession with a laminating process provided by the laminating apparatus 6.

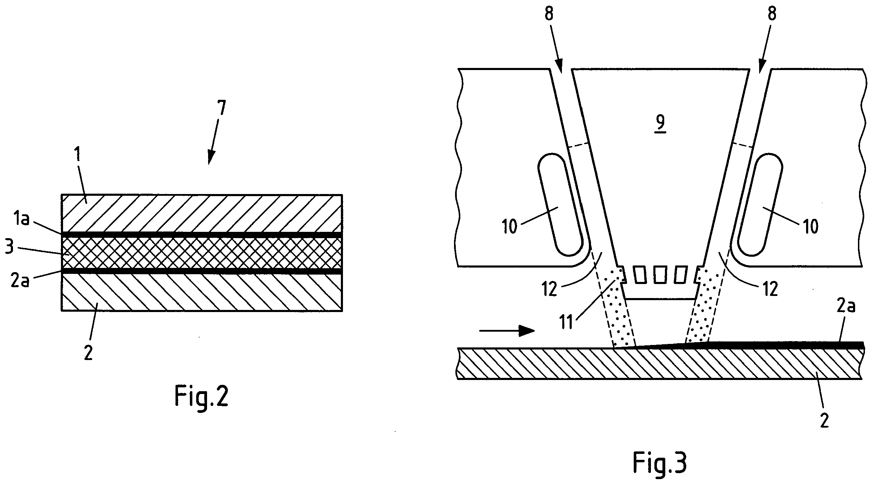

During plasma coating preferably at atmospheric pressure the plasma coating step includes providing a process gas, generating a plasma at atmospheric pressure preferably between a first and a second electrode, injecting a precursor for providing the adhesion promoter layer into the plasma afterglow, moving the at least one metal substrate for example strip into plasma afterglow and depositing at least in part the plasma polymerized adhesion promoter layer on the surface of the inner side of the at least one metal strip. The detailed process is shown on an embodiment in Fig. 3.

Fig. 2 shows a sectional view of a composite sheet 7 made from the composite strip 5 of Fig. 1 or alternatively made by stacking sheet material. A composite sheet 7 consists of two metal layers 1, 2 for example made of steel which can be plated by zinc, zinc-magnesium, chromium-plated or plated on an aluminum-basis for corrosion resistance. Both metal layers 1, 2 comprise at the inner sides plasma polymerized adhesion promoter layers 1a, 2a made by depositing plasma polymerized organic carbon acid in particular acrylic acid or methacrylic acid onto the inner surface of the metal layers 1, 2.

Fig. 3 now shows the step of plasma coating of a metal layer 2. The process gas containing N₂ and additional 3 vol.-% hydrogen, flows between a first electrode 10 and a second electrode 9. An aerosol 11 is injected into the plasma afterglow 13. The aerosol is created by a support gas, presently containing N₂ and a precursor liquid, presently containing acrylic acid. However, the precursor liquid may comprise allylamine, allylmethacrylate, (3-glycidoxypropyl)trimethoxysilane, (3-aminopropyl)triethoxysilane or preferred hydroxyethylacrylate and is directed together with the process gas 8 and the plasma onto the inner side of the metal layer 2.

The plasma 12 is generated between the first electrode 9 and the second electrode 10. The plasma afterglow 13 extends to the surface of the inner side of a metal strip 1 or 2. The aerosol 11 is directed into the plasma afterglow 13 and on the surface of the metal strip 1 or 2. This leads to a deposition of the plasma polymerized acrylic acid on the surface as adhesion promoter layer 2a. The plasma 12 activates the inner surface of the metal strip 2 as well as the mixture of the aerosol comprising the precursor liquid directed to the surface of the metal layer 2. By moving or placing the metal strip 2 through the plasma afterglow 13 a very thin indirect coating of a plasma polymerized adhesion promoter layer 2a is built on the surface of the metal strip 2. Preferably the coated plasma polymerized adhesion promoter layer 2a has a thickness of 2 to 50 nm, preferably 5 nm to 30 nm. Due to the amount of hydrogen in the process gas 8 the peel test value rises additionally compared to peel test value achieved with a process gas without hydrogen.

High values for the peel test value have been measured for uncoated steel substrates and steel substrates, which can be plated with zinc, zinc-magnesium, chromium-plated or plated on an aluminum-basis. Even for stainless steel, aluminum and its alloys and magnesium and its alloys, zinc, copper and titanium high values were measured.

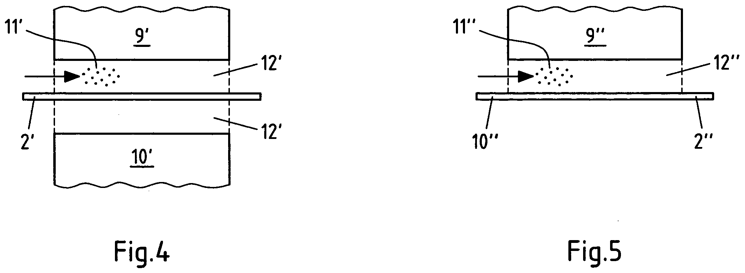

Fig. 4 shows a second embodiment of a plasma coating step of a metal substrate 2'. The plasma 12' is generated between the first electrode 10' and the second electrode 9'. Indicated by an arrow an aerosol 11' is injected into the plasma 12'. This leads to a direct coating of a plasma polymerized adhesion promoter layer on the surface of the metal substrate 2'. Instead of an aerosol 11' a gaseous precursor can be injected alternatively.

Fig. 5 shows a third embodiment of a plasma coating step of a metal substrate 2". The plasma 12" is generated between the second electrode 9" and the metal substrate 2" which acts as a first electrode 10". Indicated by an arrow an aerosol 11" or alternatively a gaseous precursor is injected into the plasma 12". A direct coating of a plasma polymerized adhesion promoter layer on the surface of the metal substrate 2" is applied.

The method for manufacturing composite sheets described here is able to provide composite sheets in an economical way with high peel test values independently of the coating of the metal substrates used for manufacturing the composite sheet.

## Claims

1. Method of manufacturing a composite sheet wherein the composite sheet comprises at least two outer metal layers and at least one intermediate polymer layer wherein the polymer layer comprises a thermoplastic polymer, said method comprising the steps of:
- providing at least a first and a second metal substrate for providing the outer metal layers and at least one intermediate polymer layer;
- coating at least one of said metal substrates with an adhesion promoter layer by plasma coating at the inner side of the at least one metal substrate, wherein the plasma is generated at atmospheric pressure and wherein the inner side of the at least one metal substrate has contact with the at least one intermediate polymer layer, wherein plasma coating includes: providing a process gas, generating a plasma, injecting a precursor for providing the adhesion promoter layer into the generated plasma or plasma afterglow, moving or placing the at least one metal substrate into the generated plasma or plasma afterglow and depositing at least in parts a plasma polymerized adhesion promoter layer on the surface of inner side of the at least one metal substrate;
- laminating the at least one intermediate polymer layer and the two outer metal layers to build a composite material.

2. Method according to claim 1,
**characterized in that**
the precursor is in liquid or in gaseous state.

3. Method according to claim 1 or 2,
**characterized in that**
an aerosol is provided by a support gas and using a precursor liquid comprising organic acid, in particular organic carboxylic acid, in particular an acrylic acid or methacrylic acid.

4. Method according to claim 1 or 2,
**characterized in that**
the liquid or gaseous precursor comprises allylamine, allylmethacrylate, (3-glycidoxypropyl)trimethoxysilane, (3-aminopropyl)triethoxysilane or preferred hydroxyethylacrylate.

5. Method according to one of claim 1 to 4,
**characterized in that**
the process gas contains N₂, CO₂, Ar and/or He.

6. Method according to claim 5,
**characterized in that**
the process gas further comprises at least hydrogen as reactive gas, in which the process gas comprises in maximum 5 vol.-% hydrogen.

7. Method according to one of claim 1 to 6,
**characterized in that**
a plasma polymerized adhesion promoter layer with a thickness of 2 to 50 nm is deposited on the inner side of at least one metal layer.

8. Method according to one of claim 1 to 7,
**characterized in that**
the plasma is generated at atmospheric pressure between a first electrode and a second electrode.

9. Method according to one of claim 1 to 8,
**characterized in that**
the metal substrates are uncoated steel substrates or steel substrates, which are plated with zinc, zinc-magnesium, chromium-plated or plated on an aluminum-basis, or stainless steel, aluminum and its alloys or magnesium and its alloys, zinc, copper, titanium or their combinations.

10. Composite sheet consisting of at least two outer metal layers (1,2) and at least one intermediate thermoplastic polymer layer (3), wherein at least one inner side of one outer metal layer comprises a plasma polymerized adhesion promoter layer (1a, 2a) coated by a method of claim 1 to 9.

11. Composite sheet of claim 10,
**characterized in that**
the plasma polymerized adhesion promoter layer (1a, 2a) has a thickness of 2 nm to 50 nm.

12. Composite sheet of claim 10 or 11,
**characterized in that**
the outer metal layers are made of an uncoated steel substrate or a steel substrate (1, 2), which is plated with zinc, zinc-magnesium, chromium-plated or plated on an aluminum-basis, or made of stainless steel, aluminum and its alloys or magnesium and its alloys, zinc, copper, titanium or their combinations.

## Patentansprüche

1. Verfahren zur Herstellung einer Kompositwerkstoffplatte, wobei die Kompositwerkstoffplatte mindestens zwei äußere Metallschichten und mindestens eine zwischenliegende Polymerschicht umfasst, wobei die Polymerschicht ein thermoplastisches Polymer umfasst, wobei das Verfahren die Schritte umfasst:
- Bereitstellen mindestens eines ersten und eines zweiten Metallsubstrats zum Bereitstellen der äußeren Metallschichten und mindestens einer zwischenliegenden Polymerschicht;
- Beschichten mindestens eines der Metallsubstrate mit einer Haftvermittlerschicht durch Plasmabeschichten an der Innenseite des mindestens einen Metallsubstrats, wobei das Plasma bei Atmosphärendruck erzeugt wird und wobei die Innenseite des mindestens einen Metallsubstrats in Kontakt mit der mindestens einen zwischenliegenden Polymerschicht steht, wobei das Plasmabeschichten umfasst: das Bereitstellen eines Prozessgases, das Erzeugen eines Plasmas, das Injizieren eines Vorläufers zum Bereitstellen der Haftvermittlerschicht in das erzeugten Plasma oder Plasmanachglühen, Bewegen oder Positionieren des mindestens einen Metallsubstrats in das erzeugte Plasma oder Plasmanachglühen und das Absetzen mindestens teilweise einer plasmapolymerisierten Haftvermittlerschicht auf der Oberfläche der Innenfläche des mindestens einen Metallsubstrats;
- Laminierens der mindestens einen Polymerzwischenschicht und der beiden äußeren Metallschichten, um ein Kompositwerkstoffmaterial herzustellen.

2. Verfahren nach Anspruch 1,
**dadurch gekennzeichnet, dass**
der Vorläufer im flüssigen oder gasförmigen Zustand vorliegt.

3. Verfahren nach Anspruch 1 oder 2,
**dadurch gekennzeichnet, dass**
ein Aerosol durch ein Trägergas und Verwenden einer Vorläuferflüssigkeit bereitgestellt wird umfassend organische Säure, insbesondere organische Carbonsäure, insbesondere eine Acrylsäure oder Methacrylsäure.

4. Verfahren nach Anspruch 1 oder 2,
**dadurch gekennzeichnet, dass**
der flüssige oder gasförmige Vorläufer Allylamin, Allylmethacrylat, (3-Glycidoxypropyl)trimethoxysilan, (3-Aminopropyl)triethoxysilan oder bevorzugt Hydroxyethylacrylat umfasst.

5. Verfahren nach einem von Anspruch 1 bis 4,
**dadurch gekennzeichnet, dass**
das Prozessgas N₂, CO₂, Ar und/oder He enthält.

6. Verfahren nach Anspruch 5,
**dadurch gekennzeichnet, dass**
das Prozessgas ferner mindestens Wasserstoff als reaktives Gas umfasst, wobei das Prozessgas maximal 5 Vol.-% Wasserstoff umfasst.

7. Verfahren nach einem von Anspruch 1 bis 6,
**dadurch gekennzeichnet, dass**
eine plasmapolymerisierte Haftvermittlerschicht in einer Dicke von 2 bis 50 nm auf der Innenseite mindestens einer Metallschicht abgesetzt wird.

8. Verfahren nach einem von Anspruch 1 bis 7,
**dadurch gekennzeichnet, dass**
das Plasma bei Atmosphärendruck zwischen einer ersten Elektrode und einer zweiten Elektrode erzeugt wird.

9. Verfahren nach einem von Anspruch 1 bis 8,
**dadurch gekennzeichnet, dass**
die Metallsubstrate unbeschichtete Stahlsubstrate oder Stahlsubstrate sind, die mit Zink, Zink-Magnesium plattiert, chromplattiert oder auf einer Aluminiumbasis oder Edelstahl, Aluminium und seine Legierungen oder Magnesium und seine Legierungen, Zink, Kupfer, Titan oder ihre Kombinationen plattiert sind.

10. Verbundwerkstoffplatte bestehend aus mindestens zwei äußeren Metallschichten (1, 2) und mindestens einer thermoplastischen Zwischenpolymerschicht (3), wobei mindestens eine Innenseite einer äußeren Metallschicht eine plasmapolymerisierte Haftvermittlerschicht (1a, 2a) umfasst, die durch ein Verfahren nach Anspruch 1 bis 9 schichtförmig aufgebracht wird.

11. Verbundwerkstoffplatte nach Anspruch 10,
**dadurch gekennzeichnet, dass**
die plasmapolymerisierte Haftvermittlerschicht (1a, 2a) eine Dicke von 2 nm bis 50 nm aufweist.

12. Verbundwerkstoffplatte nach Anspruch 10 oder 11,
**dadurch gekennzeichnet, dass**
die äußeren Metallschichten aus einem unbeschichteten Stahlsubstrat oder einem Stahlsubstrat (1, 2) bestehen, das mit Zink, Zink-Magnesium plattiert, chromplattiert oder auf einer Aluminiumbasis plattiert ist oder aus Edelstahl, Aluminium und seinen Legierungen oder Magnesium und seinen Legierungen, Zink, Kupfer, Titan oder ihren Kombinationen hergestellt ist.

## Revendications

1. Procédé de fabrication d'une feuille composite, dans lequel la feuille composite comprend au moins deux couches métalliques extérieures et au moins une couche de polymère intermédiaire, la couche de polymère comprenant un polymère thermoplastique, ledit procédé comprenant les étapes consistant à :
- fournir au moins un premier et un second substrat métallique pour fournir les couches métalliques extérieures et au moins une couche de polymère intermédiaire ;
- revêtir au moins un desdits substrats métalliques avec une couche de promoteur d'adhérence par revêtement au plasma au niveau du côté intérieur de l'au moins un substrat métallique, le plasma étant produit sous une pression atmosphérique et le côté intérieur de l'au moins un substrat métallique étant en contact avec au moins une couche de polymère intermédiaire, le revêtement au plasma comprenant :
l'utilisation d'un gaz de traitement, la production d'un plasma, l'injection d'un précurseur pour fournir la couche favorisant l'adhérence dans le plasma produit ou la post-décharge de plasma, le déplacement ou le placement de l'au moins un substrat métallique dans le plasma produit ou la post-décharge de plasma et le dépôt au moins en partie d'une couche de promoteur d'adhérence polymérisée avec du plasma sur la surface du côté intérieur de l'au moins un substrat métallique ;
- stratifier l'au moins une couche de polymère intermédiaire et les deux couches métalliques extérieures pour constituer un matériau composite.

2. Procédé selon la revendication 1,
**caractérisé en ce que**
le précurseur est dans un état liquide ou gazeux.

3. Procédé selon la revendication 1 ou 2,
**caractérisé en ce**
**qu'**un aérosol est fourni par un gaz support et en utilisant un précurseur liquide comprenant acide organique, en particulier acide carboxylique organique, en particulier un acide acrylique ou un acide méthacrylique.

4. Procédé selon la revendication 1 ou 2,
**caractérisé en ce que**
le précurseur liquide ou gazeux comprend allylamine, méthacrylate d'allyle, (3-glycidoxypropyl)triméthoxysilane, (3-aminopropyl)triéthoxysilane ou préférablement acrylate d'hydroxyéthyle.

5. Procédé selon l'une quelconque des revendications 1 à 4,
**caractérisé en ce que**
le gaz de traitement contient N₂, CO₂, Ar et/ou He.

6. Procédé selon la revendication 5,
**caractérisé en ce que**
le gaz de traitement comprend en outre au moins de l'hydrogène en tant que gaz réactif, dans lequel le gaz de traitement comprend au maximum 5 % en volume d'hydrogène.

7. Procédé selon l'une quelconque des revendications 1 à 6,
**caractérisé en ce**
**qu'**une couche de promoteur d'adhérence polymérisée avec du plasma ayant une épaisseur de 2 à 50 nm est déposée sur le côté intérieur d'au moins une couche métallique.

8. Procédé selon l'une quelconque des revendications 1 à 7,
**caractérisé en ce que**
le plasma est produit sous pression atmosphérique entre une première électrode et une seconde électrode.

9. Procédé selon l'une quelconque des revendications 1 à 8,
**caractérisé en ce que**
les substrats métalliques sont des substrats en acier nu ou des substrats en acier, qui sont plaqués avec du zinc, zinc-magnésium, plaqués du chrome ou plaqués sur une base d'aluminium, ou un acier inoxydable, de l'aluminium et ses alliages ou du magnésium et ses alliages, du zinc, du cuivre, du titane ou leurs combinaisons.

10. Feuille composite se composant d'au moins deux couches métalliques (1, 2) extérieures et d'au moins une couche de polymère thermoplastique intermédiaire (3), dans laquelle au moins un côté intérieur d'une couche métallique extérieure comprend une couche de promoteur d'adhérence (la, 2a) polymérisée avec du plasma enduite par un procédé selon l'une quelconque des revendications 1 à 9.

11. Feuille composite selon la revendication 10,
**caractérisée en ce que**
la couche de promoteur d'adhérence (1a, 2a) polymérisée avec du plasma a une épaisseur de 2 nm à 50 nm.

12. Feuille composite selon la revendication 10 ou 11,
**caractérisée en ce que**
les couches métalliques extérieures se composent d'un substrat en acier nu ou d'un substrat en acier (1, 2), qui est plaqué avec du zinc, zinc-magnésium, plaqué du chrome ou plaqué sur une base d'aluminium, ou se composent d'un acier inoxydable, d'aluminium et de ses alliages ou de magnésium et de ses alliages, de zinc, de cuivre, de titane ou de leurs combinaisons.
